(19) Europäisches Patentamt
European Patent Office
Office européen des brevets

(11) Veröffentlichungsnummer: **0 076 995**
**B1**

(12) # EUROPÄISCHE PATENTSCHRIFT

(45) Veröffentlichungstag der Patentschrift: **11.07.84**

(51) Int. Cl.³: **C 09 D 17/00**, C 09 C 3/08, C 09 C 1/22

(21) Anmeldenummer: **82109133.7**

(22) Anmeldetag: **04.10.82**

(54) **Flüssige, stabile Zubereitungen und deren Verwendung.**

(30) Priorität: **13.10.81 DE 3140519**

(43) Veröffentlichungstag der Anmeldung: **20.04.83 Patentblatt 83/16**

(45) Bekanntmachung des Hinweises auf die Patenterteilung: **11.07.84 Patentblatt 84/28**

(84) Benannte Vertragsstaaten: **CH DE FR GB IT LI**

(56) Entgegenhaltungen: **KEINE**

(73) Patentinhaber: **BASF Aktiengesellschaft, Carl-Bosch-Strasse 38, D-6700 Ludwigshafen (DE)**

(72) Erfinder: **Fechner, Wolf Dieter, Raiffeisenstrasse 22, D-6716 Dirmstein (DE)**
Erfinder: **Kranz, Joachim, Dr., Rheinrugenstrasse 22, D-6700 Ludwigshafen (DE)**
Erfinder: **Polster, Rudolf, Dr., Carostrasse 43, D-6710 Frankenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 076 995 B1

## Beschreibung

Die Erfindung betrifft neue flüssige, stabile Zubereitungen und deren Verwendung.

Zur Herstellung von Druck- und Lackfarben werden häufig Zubereitungen von Pigmenten in mit Druck- und/oder Lackfarben verträglichen Lösungsmitteln oder Bindemittellösungen hergestellt und verwendet. Damit die Zubereitungen Pigmente mit hoher Farbstärke aufweisen, müssen die Pigmente sehr feinteilig sein. Solche Zubereitungen haben jedoch den Nachteil, dass diese bereits in der Regel bei Pigmentgehalten von um 10 Gew.-% nicht mehr fliessfähig sind.

Da man andererseits möglichst konzentrierte Zubereitungen verwenden muss, um bei der Herstellung der Farben in der Auswahl der Bindemittel und der hierfür erforderlichen Lösungsmittel nicht festgelegt zu sein, werden solche Zubereitungen in der Regel in der Form von höherkonzentrierten Pasten angewendet. Für die technische Anwendung wäre e ein grosser Vorteil, wenn 20 bis 40 gew.%ige Zubereitungen von feinteiligen Pigmenten in organischen Flüssigkeiten eine fliessfähige bis flüssige Konsistenz aufweisen würden.

Aufgabe der vorliegenden Erfindung war es, flüssige, stabile, bindemittelfreie Pigmentzubereitungen aufzufinden, die das Pigment in einer stabilisierten Form enthalten, so dass beim Verdünnen keine Flockung erfolgt.

Es wurde gefunden, dass flüssige, stabile Zubereitungen vorliegen, wenn diese

a) ein feinteiliges Pigment auf der Basis von Eisencyanokomplexen, Eisen-III-oxid oder Eisen-III-oxidhydrat,

b) mindestens eine $C_6$- bis $C_{18}$-Alkylbenzolsulfonsäure,

c) mindestens eine Verbindung, die durch Mannich-Kondensation aus 2-Hydroxynaphthalin, das gegebenenfalls noch 1 oder 2 weitere β-ständige Hydroxygruppen enthält, Formaldehyd und primären oder sekundären aliphatischen, cycloaliphatischen oder aromatischen Mono-, Di-, Tri- oder Polyaminen oder 5- oder 6-gliedrigen heterocyclischen Verbindungen, die eine NH-Gruppe als Ringglied aufweisen, erhalten wird und die 1 bis 6 Hydroxynaphthylgruppen enthalten,

d) eine oder mehrere organische Flüssigkeiten und

e) gegebenenfalls weitere in Pigmentzubereitungen übliche Hilfsmittel enthalten,

wobei das Gewichtsverhältnis von (b):(c) 1:8 bis 2:1 ist und die Menge an (c) 10 bis 20 Gew.%, bezogen auf (a), beträgt.

Mit den erfindungsgemässen Zubereitungen erhält man Lackfarben, die im Vergleich zum Stand der Technik deutlich verbesserte Eigenschaften aufweisen. Die so hergestellten Lackfarben geben sehr farbstarke Überzüge mit hohem Glanz. Die Pigmente zeigen ein sehr gutes Rubout-Verhalten, sowie hohe Farbstärke bei gleichzeitig hoher Brillanz. Die neuen Zubereitungen sind mit den verschiedensten Bindemittelsystemen, z.B. ofentrocknenden oder lufttrocknenden Bindemittelsystemen verträglich, so dass die Zubereitungen universell angewendet werden können.

Die erfindungsgemässen flüssigen Zubereitungen lassen sich durch einfaches Einrühren in die Bindemittelsysteme einarbeiten, ohne dass Flokkung des Pigments eintritt. Im Vergleich zu den entsprechenden Zubereitungen des Standes der Technik, die keine Komponenten (b) und (c) enthalten, weisen die Zubereitungen gemäss der vorliegenden Erfindung eine deutliche geringere Viskosität auf. Ausserdem geben die mit erfindungsgemässen Zubereitungen hergestellten Lacke Färbungen mit erhöhter Farbstärke.

Als Pigmente (a) kommen für die neuen Zubereitungen feinteilige Pigmente auf der Basis von Eisencyanokomplexen, Eisen-III-oxid und Eisen-III-oxidhydrat in Betracht. Die Teilchengrösse der Pigmente liegt unterhalb 0,5 μm, vorzugsweise unterhalb 0,1 μm.

Als Eisencyanokomplexe kommen die als C.I. Pigment Blue, C.I. No. 77510 bekannten, z.B. Eisenblau, Preussisch Blau, Stahlblau und Miloriblau in Betracht, von denen Miloriblau bevorzugt ist.

Die Herstellung der in den Zubereitungen enthaltenen feinteiligen Pigmente ist bekannt.

Als Komponente (b) kommen $C_8$- bis $C_{18}$-Alkylbenzolsulfonsäuren in Betracht, wobei das Alkyl linear oder verzweigt sein kann. Im Einzelnen sind z.B. zu nennen: 4-Octylbenzolsulfonsäure, 4-Nonylsulfonsäure, 4-Decylbenzolsulfonsäure, 4-Dodecylbenzolsulfonsäure, 4-Tetradecylbenzolsulfonsäure, 4-Hexadecylbenzolsulfonsäure, 4-Octadecylbenzolsulfonsäure oder Gemische dieser Säuren. Bevorzugt ist Dodecylbenzolsulfonsäure.

Wesentlicher Bestandteil der neuen Zubereitungen ist die Komponente (c); die durch Mannich-Kondensation von 2-Hydroxynaphthalin, das gegebenenfalls noch 1 oder 2 weitere β-ständige OH-Gruppen trägt, Formaldehyd und primären oder sekundären aliphatischen, cycloaliphatischen oder aromatischen Mono-, Di-, Tri- oder Polyaminen oder >NH-Gruppen enthaltenden 5- oder 6-gliedrigen Heterocyclen erhalten wird, wobei das Kondensationsprodukt 1 bis 6 β-Hydroxynaphthylgruppen enthalten kann.

Als 2-Hydroxynaphthaline kommen zur Herstellung von (c) neben 2-Hydroxynaphthalin, 2,7-Dihydroxynaphthalin und 2,3-Dihydroxynaphthalin in Betracht. Bevorzugt sind Kondensationsprodukte auf der Basis von 2-Hydroxynaphthalin und 2,7-Dihydroxynaphthalin.

Als zur Herstellung von (c) geeignete primäre und sekundäre Amine sind z.B. zu nennen:

primäre und sekundäre, aliphatische und cycloaliphatische Monoamine, $C_2$- und $C_3$-Alkylendiamine, Di-$C_2$- und $C_3$-alkylen-tri-amine, Tri-$C_2$- und $C_3$-alkylen-tetramine und Poly-($C_2$- und $C_3$-alkylen)-polyamine, cycloaliphatische Diamine, aromatische Diamine und 5- oder 6-gliedrige gesättigte oder ungesättigte heterocyclische Verbindungen, die eine NH-Gruppe als Ringglied enthalten.

Die Verbindungen (c) sind bekannt oder werden in bekannter Weise hergestellt (Houben-Weyl, Methoden der organischen Chemie, 4. Auflage, Band XI, Seite 731 ff (1957) Georg Thieme Verlag, Stuttgart).

Vorzugsweise werden als (c) Verbindungen der allgemeinen Formel

$R^3-CH_2-X$ (I)

verwendet, in der

$R^3$ für 2-Hydroxynaphthyl-1, das gegebenenfalls noch 1 oder 2 weitere β-ständige Hydroxylgruppen trägt, oder für

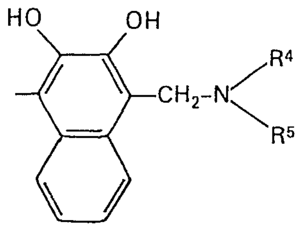

und

X für einen Rest der Formel

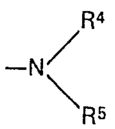 oder 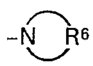 stehen ,

worin

$R^4$ und $R^5$ je einen aliphatischen oder phenylaliphatischen Rest, wobei $R^4$ und $R^5$ gleich oder verschieden sein können oder

$R^5$ eine Gruppe der Formel $-CH_2-R^3$

und

$R^4$ eine Gruppe der Formel

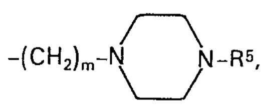

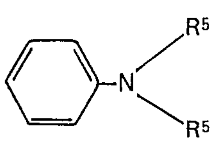 , 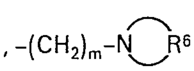

oder 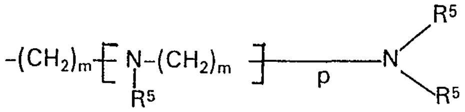

m 2 oder 3,

p 0, 1 oder 2,

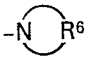

einen gesättigten oder ungesättigten 5- oder 6-gliedrigen heterocyclischen Ring, der gegebenenfalls -O- oder >N-$R^7$ als weitere Ringglieder und/oder eine oder zwei >C=O-Gruppen enthält, und $R^7$ $C_1$- bis $C_4$-Alkyl bedeuten.

Für $R^4$ und $R^5$ sind als aliphatische und phenylaliphatische Reste z.B. zu nennen:

1. $C_1$- bis $C_5$-Alkyl, wie Methyl, Ethyl, Propyl, n- oder iso-Butyl, Pentyl;
2. $C_1$- bis $C_8$-Alkoxy-$C_2$- und $C_3$-alkyl wie 2-Methoxyethyl, 3-Methoxypropyl, 2-Ethoxyethyl, 3-Ethoxypropyl, 2-n- oder 1-Propoxyethyl, 3-n- oder i-Propoxypropyl, 2-n-Butoxyethyl, 3-n-Butoxypropyl, 2-(2'-Ethylhexoxy)-ethyl, 3-(2'-Ethylhexoxy)-propyl;
3. Alkoxy-alkoxy-$C_2$- und $C_3$-alkyl mit 3 bis 11 C-Atomen im Alkoxyalkoxy, 2'-Methoxy-2-ethoxyethyl, 2'-Methoxy-3-ethoxypropyl, 3'-Methoxy-propoxypropyl, 2'-Ethoxy-2-ethoxyethyl, 2'-Ethoxy-3-ethoxypropyl, 3'-Ethoxy-3-propoxypropyl, 2'-Propoxy-2-ethoxyethyl, 2'-Propoxy-3-ethoxypropyl, 3'-Propoxy-3-propoxypropyl, 2'-Butoxy-ethoxyethyl, 2'-Butoxy-3-ethoxypropyl, 3'-Butoxy-3-propoxypropyl, 3'-(2"-Ethylhexoxy)-3-propoxypropyl;
4. Hydroxy-$C_2$- bis $C_3$-alkyl wie 2-Hydroxyethyl, 2- oder 3-Hydroxypropyl;
5. N,N-Di-$C_1$- bis $C_4$-Alkylamino-$C_2$- bis $C_3$-alkyl wie 2-(N,N-Dimethylamino)-ethyl, 3-(N,N-Dimethylamino)-propyl, 2-(N,N-Dimethylamino)-ethyl, 2-(N,N-Dibutylamino)-ethyl, 3-(N,N-Diethylamino)-propyl, 3-(N,N-Dibutylamino)-propyl;
6. Phenyl-$C_1$- bis $C_4$-alkyl wie Benzyl, 2-Phenylethyl, 2- und 3-Phenylpropyl;
7. $-C_2H_4-NR^6$ und $-C_3H_6-NR^6$, worin $-NR^6$ einen 5- oder 6-gliedrigen gesättigten oder ungesättigten heterocyclischen Ring, der gegebenenfalls -O- oder >N-$R^7$ als weitere Ringglieder und/oder eine oder zwei >CO-Gruppen aufweist und $R^7$ $C_1$- bis $C_4$-Alkyl bedeutet.

Als heterocyclische Reste kommen für $-NR^6$ z.B. solche in Betracht, die sich vom Morpholin, Piperidin, Pyrrolidon, Pyrrolidin, Pyrazol, N'-$C_1$- bis $C_4$-Alkylpiperazin oder von Phthalimid ableiten.

Von den Verbindungen der Formel (I) sind solche bevorzugt, in denen $R^3$ für 2,7-Dihydroxynaphthyl-1 und 2-Hydroxynaphthyl-1 steht.

Von diesen Verbindungen der Formel (I) sind wiederum solche besonders bevorzugt, bei denen $R^3$ und $R^4$ die oben unter 1 bis 7 angegebene Bedeutung haben. Weiterhin sind Verbindungen der Formel I besonders bevorzugt, bei denen $R^3$ = 2-Hydroxynaphthyl-1, 2,7-Dihydroxynaphthyl-1 und X

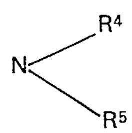

ist, wobei $R^5$ für den Rest $-CH_2-R^3$ und $R^4$ für Reste der Formeln

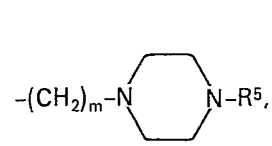 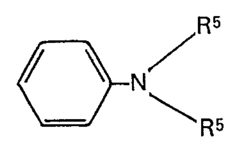 ,

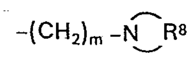 oder

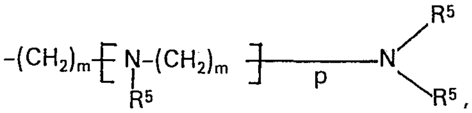 stehen,

worin m = 2 oder 3, p = 0,1 oder 2 sind und $-NR^8$ einen Rest bedeutet, der sich vom Morpholin oder Piperidin ableitet.

Ganz besonders bevorzugt sind aus wirtschaftlichen Gründen für (c) Verbindungen der Formeln (IIa) und (IIb)

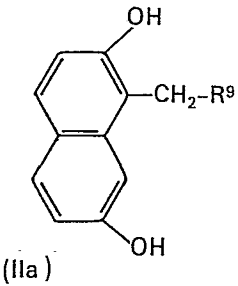
(IIa)

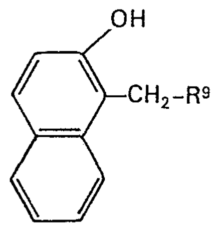
(IIb)

in denen $R^9$ für N-Morpholinyl, N-Piperidinyl, N-Pyrrolidonyl, N-Pyrazolyl-, N-Phthalimido, n-(N'-Methylpyrazinyl oder N-(N'-Ethylpyrazinyl) oder für Di-$C_1$- bis $C_4$-alkylamino wie Dimethylamino, Diethylamino, Dipropylamino oder Dibutylamino, Di-(2-methoxyethyl)-amino, Di-(2-ethoxyethyl)-amino, Di-(2-propoxyethyl)-amino, Di-(2-butoxyethyl)-amino, Di-(3-methoxypropyl)-amino, Di-(3-methoxypropyl)-amino, Di-(3-ethoxypropyl)-amino, Di-(3-butoxypropyl)-amino, Di-(2-hydroxyethylamino), Dibenzylamino steht.

Als organische Flüssigkeiten (d) kommen für die flüssigen Zubereitungen solche in Betracht, wie sie üblicherweise zur Herstellung von Lackfarben verwendet werden, z.B. Alkylaromaten wie Toluol, Xylole, $C_9$- bis $C_{11}$-Alkylbenzole, Carbonsäureester von Ethylenglykolmono-$C_1$- bis $C_4$-alkylethern mit $C_2$- bis $C_4$-Alkansäuren, wie Ethylenglykolmonoethyletheracetat sowie Gemische dieser Flüssigkeiten.

Die Zubereitungen der vorliegenden Erfindung enthalten, bezogen auf (a), 10 bis 20 Gew.% an (c), wobei das Verhältnis von (b):(c) 1:8 bis 2:1 Gewichtsteile beträgt.

Die neuen Zubereitungen können neben (a) bis (d) noch weitere in flüssigen Pigmentzubereitungen übliche Mittel (e) enthalten, z.B. Mittel, welche die Sedimentation der Pigmente vermindern oder sogar ganz verhindern, Korrosionsschutzmittel, $p_H$-Stabilisatoren u.ä.

Von diesen Mitteln werden – falls erforderlich – vorzugsweise solche mitverwendet, welche die Sedimentation des Pigments vermindern oder sogar ganz verhindern. Die Mitverwendung von diesen Mitteln ist vor allem bei Pigmenten auf der Basis von Eisencyanokomplexen wie Miloriblau von Vorteil.

Als die Sedimentation verhindernde Mittel kommen z.B. die Di-$C_4$- bis $C_{18}$-alkylester der Sulfobernsteinsäure in Form der Alkalimetall- oder Ammoniumsalze in Betracht, von denen der Dioctylester besonders bevorzugt ist.

Die Mengen an den Mitteln (e) sollen so gering wie möglich sein und liegen in der Regel – bezogen auf (a) – bei bis zu 3 Gew.%, vorzugsweise zwischen 0,1 und 3, insbesondere zwischen 0,3 und 2 Gew.%.

Die neuen flüssigen Zubereitungen enthalten in der Regel – bezogen auf die Zubereitung aus (a+b+c+d) – 20 bis 55 Gew.% (a), 1,0 bis 12 Gew.% (b), 2 bis 8 Gew.% (c) und 77,0 bis 30 Gew.% (d).

Bevorzugt sind Zubereitungen, die – bezogen auf (a+b+c+d) – 25 bis 50 Gew.% (a), 1,5 bis 10 Gew.% (b), 3 bis 7,0 Gew.% (c) und 70,5 bis 38 Gew.% (d) enthalten.

Die neuen Zubereitungen werden durch Mischen der Komponenten in der bzw. den gewünschten organischen Flüssigkeiten erhalten. Zweckmässigerweise trägt man das feinteilige Pigment (a) in die Mischung aus (b) + (c) in (d) ein, da man so direkt die flüssige Zubereitung erhält. Man kann auch zunächst (a) in (d) eintragen. Dabei entsteht eine dickflüssige bis feste zähe Paste, die beim Einarbeiten von (b) + (c) dann flüssig wird. Vorteilhafterweise verfährt man so, dass (a) in die Mischung aus (c) und (d) eingetragen und homogenisiert wird und dann als letztes (b) zugegeben wird, wobei die zähe Paste flüssig wird.

Die vorliegende Erfindung soll durch die folgenden Ausführungsbeispiele weiter erläutert werden. Die im folgenden angegebenen Teile und Prozentangaben beziehen sich auf das Gewicht. Die Viskosität der Zubereitungen wurde durch die Auslaufzeit der Zubereitung in Sekunden aus dem DIN-Becher mit der 6-mm-Düse angegeben.

A. Coloristische Prüfung der Zubereitungen
Al-Lack

Zur Beurteilung der coloristischen Eigenschaften der in den Zubereitungen enthaltenen Pigmente wurde mit den Zubereitungen Lacke in 2 verschiedenen Lacksystemen hergestellt.

Lack 1: Einbrennlack auf Basis Alkyd-Harnstoff-Melamin-Harz (Lösungsmittel: Xylol/Butanol-Gemisch).

Lack 2: langöliges lufttrocknendes Alkydharz (®Alkydal F 681) (Lösungsmittel: Testbenzin).

Die zur Herstellung der Färbungen (Lackierungen) verwendeten Lacke wurden wie folgt hergestellt:

1.1 Buntlacke 1) und 2) (Pigmentgehalt: 10%) wurden aus den Zubereitungen durch 2-stufiges Auflacken hergestellt. Hierzu wird die 10 g Pigment entsprechende Menge Pigmentzubereitung, gegebenenfalls nach dem Einstellen auf 20% Pigmentgehalt, mit der in der folgenden Tabelle angegebenen Menge Lack 1 bzw. Lack 2 mit der angegebenen Bindemittelkonzentration in 2 Stufen verdünnt.

| Auflackung Stufe | Pigment-Zubereitung* | Buntlack 1 g | Buntlack 1 Bindemittel % | Buntlack 2 g | Buntlack 2 Bindemittel % |
|---|---|---|---|---|---|
| I | 50 | 25 | 21,5 | 25 | 25 |
| II | | 25 | 43 | 25 | 50 |

*) 20%ig an Pigment

In Stufe I wird der Lack 2 Minuten langsam mit einem Lamellenrührer eingerührt. In Stufe II wird das Gemisch 3 Minuten bei 2000 Upm gerührt.

1.2 Purtonlacke 1) und 2) (5% Pigment)

25 g Buntlack 1) bzw. 2) aus A 1.1 werden mit 25 g Lack 1 bzw. Lack 2 mit 35% Bindemittelgehalt homogen gemischt.

1.3 Weissverschnitt - Lack 1

1.3.1

8 g Purtonlack 1 aus A 1.2 werden mit 20 g Weisslack (40%ig Titandioxid) homogen gemischt.

1.3.2

16 g Purtonlack 1 aus A 1.2 werden mit 20 g Weisslack (40%ig Titandioxid) homogen gemischt.

1.4 Weissverschnitt - Lack 2

1.4.1

4 g Purtonlack 2 (aus A 1.2) werden mit 20 g Weisslack (20%ig Titandioxid) und 18 Tropfen Härtungsmittel homogen gemischt.

1.4.2

8 g Purtonlack 2 (aus A 1.2) werden mit 20 g Weisslack (20%ig Titandioxid) und 18 Tropfen Härtungsmittel homogen gemischt.

1.5 Vergleichspurtonlacke 1 und 2 (5% Pigment)

5 g Vergleichspigment und 95 g Lack 1 bzw. Lack 2 (Bindemittelgehalt: 35%) werden nach dem Zufügen von 100 ml Glaskugeln (3 mm ∅) auf einer Schüttelmühle (RRED DEVIL) 60 Minuten geschüttelt.

Der Lack wird von den Glaskugeln abgesiebt.

1.6 Weissverschnitt - Lack 1 (Vergleich)

1.6.1

8 g Purtonlack 1 aus A 1.5 werden mit 20 g Weisslack (40%ig Titandioxid) homogen gemischt.

1.6.2

16 g Purtonlack 1 aus A 1.5 werden mit 20 g Weisslack (40%ig Titandioxid) homogen gemischt.

1.7 Weissverschnitt - Lack 2 (Vergleich)

1.7.1

4 g Purtonlack 2 aus A 1.5 werden mit 20 g Weisslack (20%ig Titandioxid) und 18 Tropfen Härtungsmittel homogen gemischt.

1.7.2

8 g Purtonlack aus A 1.5 werden mit 20 g Weisslack (20%ig Titandioxid) und 18 Tropfen Härtungsmittel homogen gemischt.

A2. Färbungen und deren Auswertung

2.1 Weissverschnitt - Lack 1

Der Lack aus A 1.3 und A 1.6 wird mit einer 150 µm Spiralrakel auf Karton abgezogen und die Färbung nach dem Ablüften (20 Minuten) bei 120°C eingebrannt (15 Minuten).

2.2 Weissverschnitt - Lack 2

Der Lack aus A 1.4 und A 1.7 wird mit einer 150 µm Spiralrakel auf Karton abgezogen und an der Luft getrocknet.

2.3 Die nach A 2.1 und A 2.2 erhaltenen Weissverschnittfärbungen wurden ach dem CIELAB-System (Dr. Fritz Heinrich, defazet 1977, Nr. 8, Seiten 318 bis 324) hinsichtlich Farbstärke, Farbton (H) und Reinheit (C) ausgewertet. Die Farbstärke wurde als Färbeäquivalent (FAE) auf die Färbung, die das Vergleichspigment enthält, bezogen (=100).

Beispiele 1 bis 7

Zu D Teilen eines Gemisches aus $C_9$- bis $C_{19}$-Alkylbenzolgemisch und Ethylenglykolethyletheracetat (70:30 Teilen) und C Teilen der Verbindung

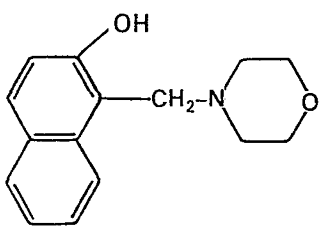

werden A Teile Miloriblaupigmentpulver (Grösse der Primärteilchen 0,1 µm) eingetragen und homogen gerührt. Dann werden unter Rühren B Teile Dodecylbenzolsulfonsäure zugegeben. Man erhält eine flüssige Zubereitung, die im Einbrennlack und im Alkydlack sehr farbstarke, farbtonreine brillante Weissverschnittfärbungen liefert.

Die angewendeten Mengen A, B, C und D sind in der Tabelle I zusammengestellt. In dieser Tabelle sind auch die Viskosität der Zubereitungen (Spalte 6) und die Ergebnisse der coloristischen Prüfung (A 2.3) im Lack 1 für die nach A 1.2, A 1.3.1 und A 2.1 erhaltenen Weissverschnitte im Vergleich zu den nach A 1.5, A 1.6.1 und A 2.1 erhaltenen Vergleichsfärbungen enthalten.

Tabelle I

| Beispiel | Zubereitung aus D [Teile] | C [Teile] | A [Teile] | B [Teile] | Zub. Viskosität [s] | Prüfungsergebnisse Lack 1 / Weissverschnitt FAE | ΔH | ΔC |
|---|---|---|---|---|---|---|---|---|
| 1 | 40 | 5 | 50 | 5 | 60 | 98 | 0 | 0 |
| 2 | 45 | 5 | 45 | 5 | 9 | 93 | 0 | +0,1 |

Tabelle I (Fortsetzung)

| Beispiel | Zubereitung aus D [Teile] | C [Teile] | A [Teile] | B [Teile] | Zub. Visko-sität [s] | Prüfungsergebnisse Lack 1 / Weissverschnitt FAE | ΔH | ΔC |
|---|---|---|---|---|---|---|---|---|
| 3 | 50 | 5 | 40 | 5 | 6 | 95 | +0,1 | −0,2 |
| 4 | 55 | 5 | 35 | 5 | 5 | 96 | +0,1 | −0,3 |
| 5 | 60 | 5 | 30 | 5 | 5 | 93 | +0,1 | −0,3 |
| 6 | 55 | 5 | 30 | 10 | 5 | 96 | +0.1 | +0,3 |
| 7 | 47 | 5 | 45 | 3 | 6 | 90 | −0,3 | +0,3 |
| 8a) | 48,5 | 5 | 45 | 1,5 | 8 | 89 | −0,6 | +0,4 |
| 8b) | 51,5 | 2 | 45 | 1,5 | >100 | 93 | −0,2 | +0,1 |
| 8c) | 47,5 | 5 3) | 45 | 1,5 | 5 | 92 | ±0 | +0,3 |
| 8d) | 42,5 | 5 3) | 50 | 1,5 | 7 | 92 | −0,3 | +0,4 |
| Vergl. II | 80 | 0 | 20 | 0 | 2) | >300 | >−4 | −10 |
| Vergl. I 1) | | | | | | 100 | 246,1 H | 32,3 C |

1) hergestellt nach A 1.5, A 1.6.1, A 2.1
2) inhomogen, Pigment setzt sich ab
3) + 1,0 Teil Di-n-octylester der Sulfobernsteinsäure/Na-Salz

Beispiel 8

a) 48,5 Teile eines Gemisches aus $C_9$ bis $C_{19}$-Alkylbenzolgemisch und Ethylenglykolethyletheracetat (70:30 Teilen) und 5 Teilen der Verbindung

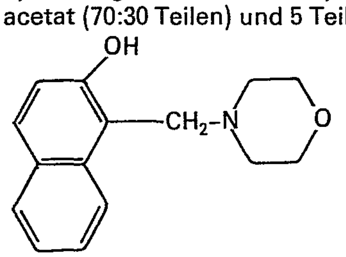

werden 45 Teile Miloriblaupigment (Pulver) (Grösse der Primärteilchen <0,1 µm) eingetragen und homogen gerührt. Dann werden unter Rühren 1,5 Teile Dodecylbenzolsulfonsäure zugegeben. Man erhält eine flüssige Zubereitung (Auslaufzeit: 8 s), die im Einbrennlack sehr farbstarke, farbtonreine brillante Weissverschnittfärbungen liefert. Die coloristische Auswertung der Zubereitung erfolgt gemäss A 1.2, A 1.3.1 und A. 2.1. Die Ergebnisse sind in der Tabelle I zusammengestellt.

b) Es wird eine Zubereitung wie unter a) angegeben dargestellt, jedoch werden 51,5 Teile Lösungsmittelgemisch und 2 Teile der angegebenen Verbindung c) verwendet. Man erhält eine noch fliessende Zubereitung. Die Auslaufzeit ist 100 s.

c) Es wird wie unter a) gearbeitet, jedoch werden 47,5 Teile Lösungsmittelgemisch und 1 Teil Di-n-octylester der Sulfobernsteinsäure/Natriumsalz angewendet. Man erhält eine sehr leicht fliessende Zubereitung. Die Auslaufzeit beträgt 5 s.

d) Es wird wie unter c) angegeben gearbeitet, jedoch werden 42,5 Teile Lösungsmittelgemisch und 50 Teile Miloriblaupigment (Pulver) angewendet. Man erhält eine sehr gut fliessende Zubereitung. Auslaufzeit: 7 s.

Beispiele 9 bis 24

Man verfährt analog Beispiel 8a, verwendet jedoch 5 Teile der in Tabelle II, Spalte 2 angegebenen Mittel (c). Man erhält flüssige Zubereitungen. Die Viskosität ist durch die Auslaufzeit charakterisiert. Die coloristische Auswertung der nach A 1.2, A 1.3.1, A 1.4.1, A 2.1 und A 2.2 erhaltenen Weissverschnitte ist in der Tabelle II zusammengestellt. Die Vergleiche wurden nach A 1.5, A 1.6.1, A 1.7.1, A 2.1 und A 2.2 hergestellt.

Tabelle II

| Beispiel | Mittel (c) | Zubereitung Viskosität [s] | Lack 1 Weissverschnitt FAE | ΔH | ΔC | Lack 2 Weissverschnitt FAE | ΔH | ΔC |
|---|---|---|---|---|---|---|---|---|
| 9 | 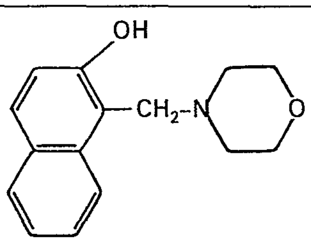 | 98 | 89 | −0,6 | +0,4 | 73 | −0,5 | +0,8 |

Tabelle II (Fortsetzung)

| Beispiel | Mittel (c) | Zubereitung Viskosität [s] | Lack 1 Weissverschnitt FAE | Lack 1 Weissverschnitt ΔH | Lack 1 Weissverschnitt ΔC | Lack 2 Weissverschnitt FAE | Lack 2 Weissverschnitt ΔH | Lack 2 Weissverschnitt ΔC |
|---|---|---|---|---|---|---|---|---|
| 10 | 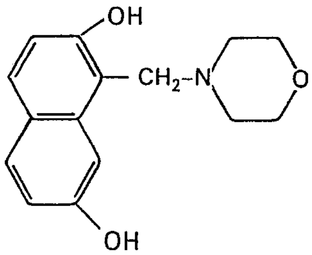 | 12 | 95 | −0,4 | −0,4 | 70 | +0,1 | +1,0 |
| 11 | 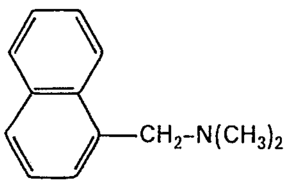 | 42 | 87 | 0 | −0,4 | 78 | +0,4 | 0,9 |
| 12 | 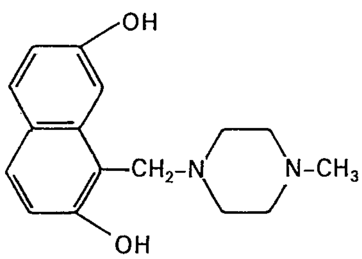 | >100 | 100 | +0,4 | −0,7 | nicht bestimmt | | |
| 13 | 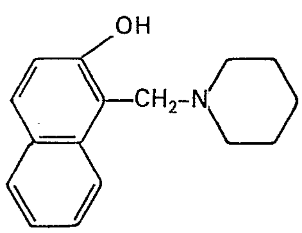 | 17 | 76 | −0,8 | +0,9 | 72 | −0,6 | +0,8 |
| Vergl. I | | — | 100 | H:246,1 | C:32,3 | 100 | H:244,0 | C:31,5 |
| 14 | 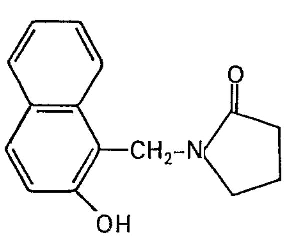 | >100 | 90 | −0,7 | +0,2 | 84 | −0,3 | −0,1 |
| 15 | 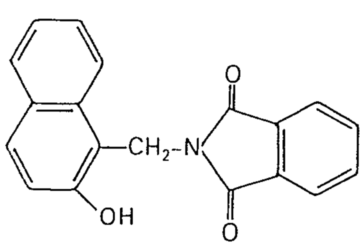 | >100 | 86 | −0,7 | +0,8 | — | — | — |

Tabelle II (Fortsetzung)

| Beispiel | Mittel (c) | Zubereitung Viskosität [s] | Lack 1 Weissverschnitt FAE | Lack 1 Weissverschnitt ΔH | Lack 1 Weissverschnitt ΔC | Lack 2 Weissverschnitt FAE | Lack 2 Weissverschnitt ΔH | Lack 2 Weissverschnitt ΔC |
|---|---|---|---|---|---|---|---|---|
| 16 | 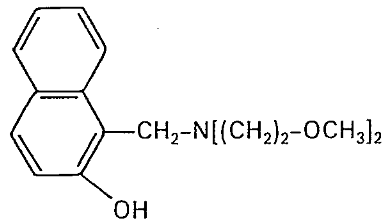 | 11 | 81 | −1,2 | +0,5 | 79 | −0,6 | +0,1 |
| 17 | 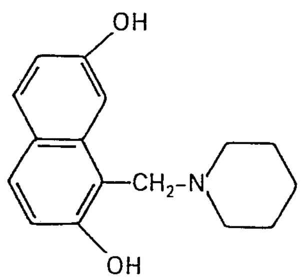 | 7 | 95 | −0,1 | −0,6 | 83 | +1,4 | −2,5 |
| 18 | 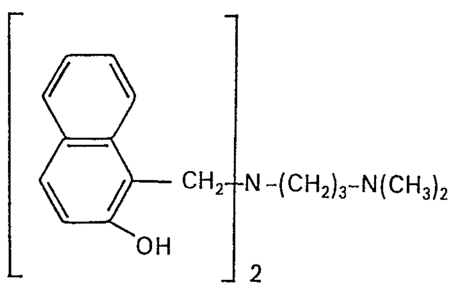 | 17 | 81 | −1,0 | +0,8 | 76 | −0,7 | +0,4 |
| 19 | 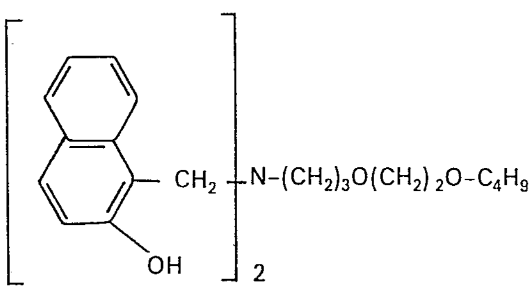 | 17 | 87 | −0,8 | +0,7 | 78 | −0,6 | +0,5 |
| 20 | 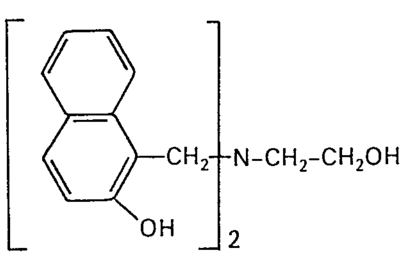 | 6 | 94 | +0,3 | −1,9 | 77 | −0,5 | +0,7 |
| 21 | 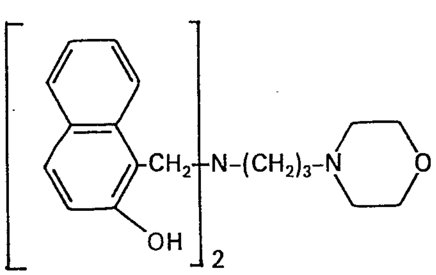 | >100 | 95 | +0,3 | −1,6 | — | — | — |

Tabelle II (Fortsetzung)

| Beispiel | Mittel (c) | Zubereitung Viskosität [s] | Lack 1 Weissverschnitt FAE | ΔH | ΔC | Lack 2 Weissverschnitt FAE | ΔH | ΔC |
|---|---|---|---|---|---|---|---|---|
| 22 | 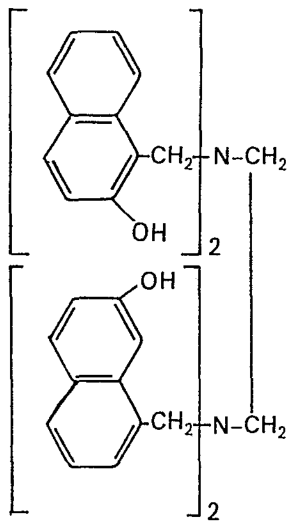 | >100 | 88 | +0,1 | −1,2 | — | — | — |
| Vergl. I | | — | 100 | H:246,1 | C:32,3 | 100 | H:244,0 | C:31,5 |
| 23 | 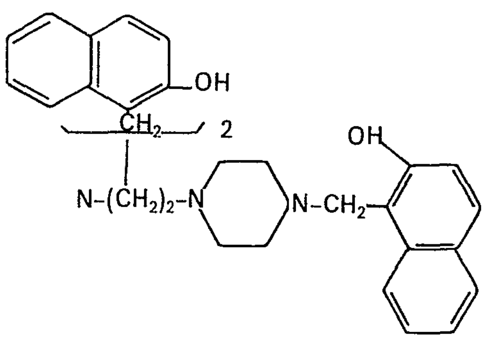 | 6 | 85 | +0,1 | −1,0 | 73 | −0,7 | +0,9 |
| 24 | 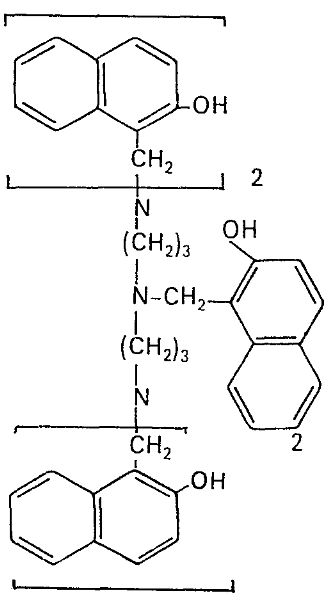 | 5 | 83 | −0,3 | −0,8 | 78 | −0,3 | +0,4 |

Beispiele 25 bis 28

D Teile eines Gemisches aus $C_9$- bis $C_{19}$-Alkylbenzolgemisch und Ethylenglykolethyletheracetat (70:30 Teilen) und C Teilen der Verbindung

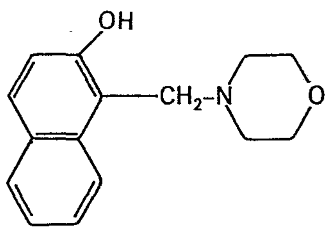

werden A Teile feinteiliges Eisenoxidpigment (Grösse der Primärteilchen 0,1 µm) eingetragen und homogen gerührt. Dann werden unter Rühren B Teile Dodecylbenzolsulfonsäure zugegeben. Man erhält eine flüssige Zubereitung, die im Einbrennlack und im Alkydlack sehr farbstarke, farbtonreine brillante Weissverschnittfärbungen liefert.

Die angewendeten Mengen A, B, C und D sind in der Tabelle III zusammengestellt. In Spalte 6 der Tabelle ist die Viskosität angegeben. Die Ergebnisse der coloristischen Prüfung nach A 2.3 sind im rechten Teil der Tabelle zusammengefasst. Die Weissverschnitte wurden nach A 1.2, A 1.3.2, A 1.4.2 und A 2.1, A 2.2 hergestellt. Die Vergleichsfärbungen III wurden nach A 1.5, A 1.6.2, A 1.7.2 und A 2.1, A 2.2 hergestellt.

Tabelle III

| Beispiel | Zubereitung aus | | | | Zub. Viskosität | Prüfungsergebnisse Weissverschnitt | | | | | |
|---|---|---|---|---|---|---|---|---|---|---|---|
| | | | | | | Lack 1 | | | Lack 2 | | |
| | D | C | A | B | | | | | | | |
| | [Teile] | | | | [s] | FAE | ΔH | ΔC | FAE | ΔH | ΔC |
| 25 | 60 | 5 | 25(1) | 10 | 6 | 83 | −0,6 | 0 | 79 | −0,1 | +1,4 |
| 26 | 50 | 5 | 35(1) | 10 | >100 | 84 | −0,6 | +0,3 | 79 | 0 | +1,6 |
| 27 | 35 | 5 | 50(2) | 10 | 22 | 82 | +1,3 | +1,5 | 88 | +0,2 | +1,2 |
| 28 | 60 | 5 | 25(3) | 10 | 15 | 80 | +0,6 | −0,1 | 84 | +0,3 | +0,5 |
| 29 | 55 | 5 | 30(1) | 10 | 8 | 88 | −0,7 | +0,4 | 81 | −0,1 | +1,6 |
| Vergl. III (1) | | | | | — | 100 | 54,3 | 35,3 | 100 | 54,0 | 36,0 |
| Vergl. III (2) | | | | | — | 100 | 60,3 | 24,3 | 100 | 63,5 | 27,4 |
| Vergl. III (3) | | | | | — | 100 | 75,8 | 39,5 | 100 | 75,8 | 41,2 |

(1) rotes Eisen-III-oxid-Pigment
(2) oranges Eisen-III-oxid-Pigment
(3) gelbes Eisen-III-oxid-Pigment

Beispiel 29

55 Teile eines Gemisches aus $C_9$- bis $C_{19}$-Alkylbenzolgemisch und Ethylenglykolethyletheracetat (70:30 Teilen) und 5 Teile der Verbindung

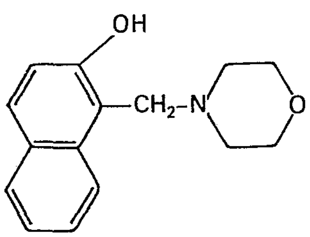

werden 30 Teile feinteiliges rotes Eisen-III-oxidpigment (Grösse der Primärteilchen 0,1 µm) eingetragen und homogen gerührt. Dann werden unter Rühren 10 Teile Dodecylbenzolsulfonsäure zugegeben. Man erhält eine flüssige Zubereitung (Auslaufzeit: 8 s), die im Einbrennlack und im Alkydlack sehr farbstarke, farbtonreine brillante Weissverschnittfärbungen liefert. Die coloristische Auswertung der mit der Zubereitung erhaltenen Weissverschnitte erfolgt gemäss A 2.3. Die Weissverschnitte wurden nach A 1.2, A 1.3.2, A 1.4.2, A 2.1 und A 2.2 hergestellt. Die Vergleichsfärbungen wurden nach A 1.5, A 1.6.2, A 1.7.2, A 2.1 und A 2.2 erhalten. Die Ergebnisse sind in der Tabelle III zusammengestellt.

Beispiele 30 bis 35

Es wird nach den Angaben des Beispiels 29 gearbeitet, jedoch werden als (c) die in der Tabelle IV angegebenen Verbindungen angewendet. Man erhält flüssige Zubereitungen. Die Viskosität ist durch die Auslaufzeit charakterisiert. Die coloristische Auswertung erfolgte nach A 2.3. Die Weissverschnittfärbungen wurden nach A 1.2, A 1.3.2, A 1.4.2, A 2.2 und A 2.2 hergestellt. Die Vergleichsfärbungen wurden nach A 1.5, A 1.6.2, A 1.7.2, A 2.1 und A 2.2 erhalten. Die Ergebnisse sind in der Tabelle IV zusammengefasst.

Tabelle IV

| Beispiel | Mittel (c) | Zubereitung Viskosität [s] | Lack 1 Weissverschnitt FAE | Lack 1 Weissverschnitt ΔH | Lack 1 Weissverschnitt ΔC | Lack 2 Weissverschnitt FAE | Lack 2 Weissverschnitt ΔH | Lack 2 Weissverschnitt ΔC |
|---|---|---|---|---|---|---|---|---|
| 30 | 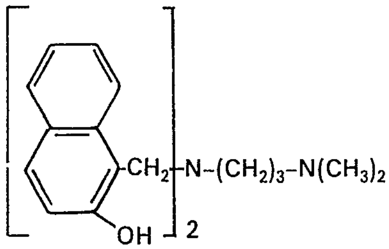 | 6 | 83 | −0,4 | +0,6 | 86 | −0,3 | +1,5 |
| 31 | 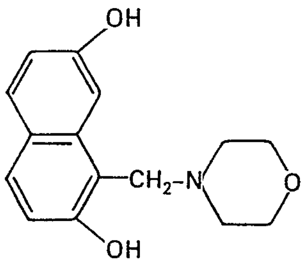 | 7 | 87 | −0,8 | +0,2 | 85 | −0,5 | +1,2 |
| 32 | 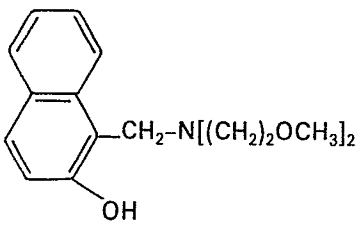 | >100 | 84 | −0,5 | +0,7 | 77 | +0,1 | +1,8 |
| 33 | 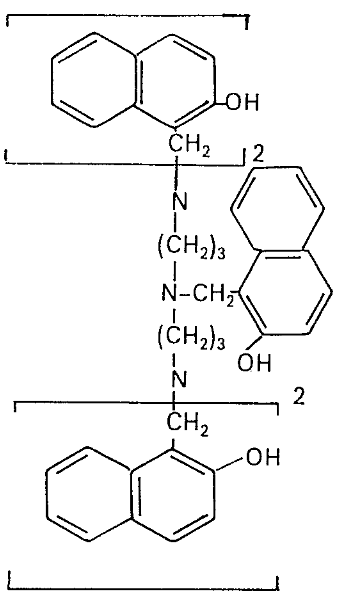 | 6 | 81 | −0,4 | +0,6 | 81 | −0,2 | +1,6 |

Tabelle IV

| Beispiel | Mittel (c) | Zubereitung Viskosität [s] | Lack 1 Weissverschnitt FAE | ΔH | ΔC | Lack 2 Weissverschnitt FAE | ΔH | ΔC |
|---|---|---|---|---|---|---|---|---|
| 34 | 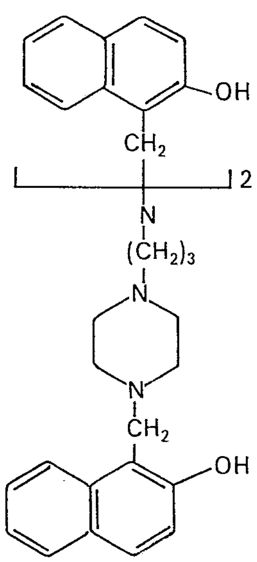 | 6 | 80 | −0,6 | +0,4 | 83 | −0,2 | +1,6 |
| 35 | 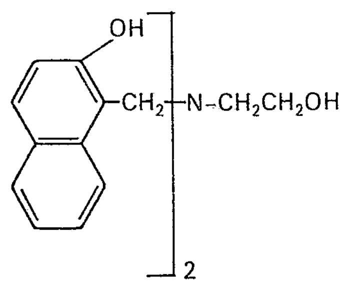 | 6 | 86 | −0,6 | −0,1 | 96 | −0,3 | +1,4 |
| Vergl. III (1) | | — | 100 | H 54,3 | C 35,3 | 100 | H 54,0 | C 36,0 |

**Patentansprüche**

1. Flüssige, stabile Zubereitungen, enthaltend

a) ein feinteiliges Pigment auf der Bais von Eisencyanokomplexen, Eisen-III-oxid oder Eisen-III-oxidhydrat,

b) mindestens eine $C_6$- bis $C_{18}$-Alkylbenzolsulfonsäure,

c) mindestens eine Verbindung, die durch Mannich-Kondensation aus 2-Hydroxynaphthalin, das gegebenenfalls noch 1 oder 2 weitere β-ständige Hydroxygruppen enthält, Formaldehyd und primären, sekundären aliphatischen, cycloaliphatischen oder aromatischen Mono-, Tri- oder Polyaminen oder 5- oder 6-gliedrigen heterocyclischen Verbindungen, die eine NH-Gruppe als Ringglied aufweisen, erhalten wird und die 1 bis 6 Hydroxynaphthylgruppen enthält,

d) eine oder mehrere organische Flüssigkeiten und

e) gegebenenfalls weitere in Pigmentzubereitungen übliche Hilfsmittel,

wobei das Gewichtsverhältnis von (b):(c) 1:8 bis 2:1 ist und die Menge an (c) 10 bis 20 Gew.%, bezogen auf (a), beträgt.

2. Zubereitungen gemäss Anspruch 1, dadurch gekennzeichnet, dass diese als (c) mindestens eine Verbindung der allgemeinen Formel

$R^3$–$CH_2$–X

enthält, in der

$R^3$ 2-Hydroxynaphthyl-1, das gegebenenfalls 1 oder 2 weitere β-ständige Hydroxygruppen trägt, oder

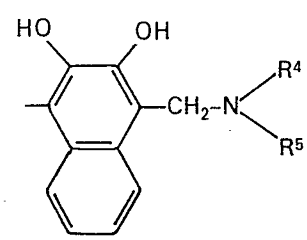

und X einen Rest der Formel

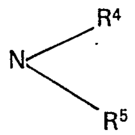

oder 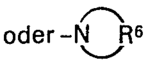

worin $R^4$ und $R^5$ für je einen aliphatischen oder phenylaliphatischen Rest, wobei $R^4$ und $R^5$ gleich oder verschieden sein können, oder $R^5$ für eine Gruppe der Formel $-CH_2-R^3$ und $R^4$ für eine Gruppe der Formel

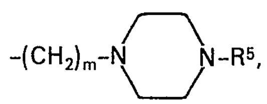, 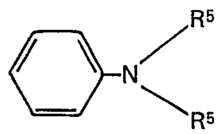,

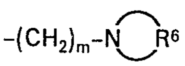

oder 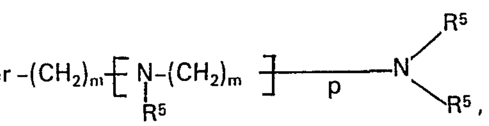,

m für 2 oder 3,
p für 0, 1 oder 2,

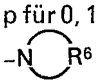

für einen gesättigten oder ungesättigten 5- oder 6-gliedrigen heterocyclischen Ring, der gegebenenfalls >O oder >N–$R^7$ als weitere Ringglieder und/oder eine oder zwei >C=O-Gruppen aufweist und $R^7$ für $C_1$- bis $C_4$-Alkyl stehen.

3. Zubereitungen gemäss Anspruch 2, dadurch gekennzeichnet, dass diese als (c) eine oder mehrere Verbindungen der angegebenen Formel enthält, in der $R^3$ 2-Hydroxynaphthyl oder 2,7-Dihydroxynaphthyl und

X 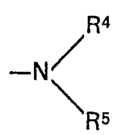

bedeuten, wobei $R^5$ für $-CH_2-R^3$ und $R^4$ für

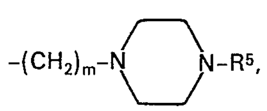, 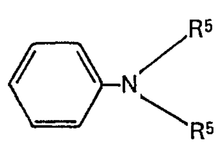

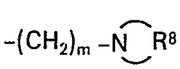

oder 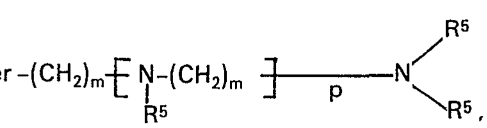,

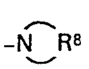 für 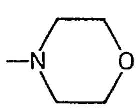 oder 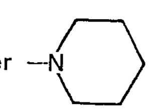,

m für 2 oder 3 und
p für 0, 1 oder 2 stehen.

4. Zubereitungen gemäss den Ansprüchen 1 oder 2, dadurch gekennzeichnet, dass diese als (c) mindestens eine Verbindung der Formeln

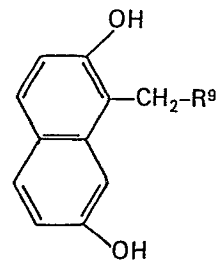

(IIa)

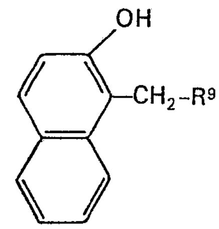

(IIb)

enthält, in denen $R^9$ für N-Morpholin, N-Piperidinyl, N-Pyrrolidonyl, N-Pyrazolyl-, N-Phthalimido, n-(N'-Methylpyrazinyl), N-(N'-Ethylpyrazinyl), Dimethylamino, Diethylamino, Dipropylamino, Dibutylamino, Di-(2-methoxyethyl)-amino, Di-(2-ethoxyethyl)-amino, Di-(2-propoxyethyl)-amino, Di-(2-butoxyethyl)-amino, Di-(3-methoxypropyl)-amino, Di-(3-ethoxypropyl)-amino, Di-(3-butoxypropyl)-amino, Di-(2-hydroxyethylamino) oder Dibenzylamino steht.

5. Zubereitungen gemäss Anspruch 1, 2, 3 oder 4, dadurch gekennzeichnet, dass diese als e) 0,1 bis 3 Gew.%, bezogen auf a), Sedimentation vermindernde oder verhindernde Mittel enthalten.

6. Zubereitungen gemäss Anspruch 5, dadurch gekennzeichnet, dass diese als (e) Di-$C_4$- bis $C_{18}$-alkylsulfobernsteinsäureester in Form der Alkalimetall- oder Ammoniumsalze enthalten.

7. Zubereitungen gemäss Anspruch 5, dadurch gekennzeichnet, dass diese als (e) Dioctylsulfobernsteinsäureester in Form der Alkalimetall- oder Aminsalze enthalten.

8. Zubereitungen gemäss Anspruch 1, 2, 3, 4, 5, 6 oder 7, dadurch gekennzeichnet, dass diese – bezogen auf (a+b+c+d) – 25 bis 50 Gew.% (a), 1,5 bis 10 Gew.% (b), 3,0 bis 7,0 Gew.% (c) und 70,5 bis 38 Gew.% (d) enthalten.

9. Verwendung der Zubereitungen gemäss den Ansprüchen 1 bis 8 zum Färben von Lacken.

**Revendications**

1. Compositions liquides stables contenant:

a) un pigment en fines particules à base de complexe cyanés du fer, d'oxyde de fer-III ou d'oxyde hydraté de fer-III,

b) au moins un acide (alkyle en C6–C18)-benzènesulfonique,

c) au moins un composé qui a été obtenu par une condensation de Mannich à partir du 2-hydroxynaphtalène portant encore le cas échéant 1 ou 2 autres groupes hydroxy en position bêta, du formaldéhyde et de mono-, di-, tri- ou poly-amines aliphatiques, cycloaliphatiques ou aromatiques primaires ou secondaires ou de composés hétérocycliques à 5 ou 6 chaînons

contenant un groupe NH en tant que chaînon, et qui contient de 1 à 6 groupes hydroxynaphtyle,

d) un ou plusieurs liquides organiques et

e) le cas échéant d'autres produits auxiliaires usuels dans les compositions pigmentaires,

les proportions relatives en poids b):c) allant de 1:8 à 2:1 et la quantité de c) représentant 10 à 20% du poids de a).

2. Compositions selon la revendication 1, caractérisées en ce qu'elles contiennent en tant que composant c) au moins un composé de formule générale

$R^3$–$CH_2$–X

dans laquelle

$R^3$ représente le groupe 2-hydroxynaphtyle-1 portant éventuellement 1 ou 2 autres groupes hydroxy en position bêta, ou bien

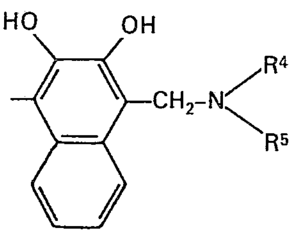

et X est un reste de formule

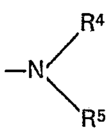

ou

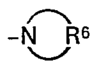

dans lequel $R^4$ et $R^5$ représentent chacun un reste aliphatique ou phénylaliphatique, $R^4$ et $R^5$ pouvant être identiques ou différents, ou bien

$R^5$ représente un groupe de formule $-CH_2-R^3$, et

$R^4$ représente un groupe de formule

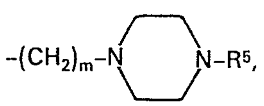

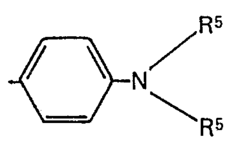

,

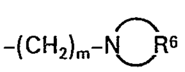

ou 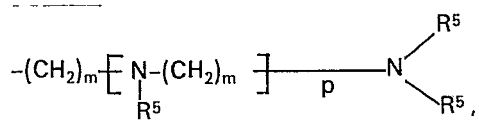

m est égal à 2 ou 3,
p est égal à 0, 1 ou 2,

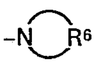

représente un noyau hétérocyclique saturé ou insaturé à 5 ou 6 chaînons qui contient éventuellement >0 ou >N–$R^7$ en tant qu'autre chaînon cyclique et/ou 1 ou 2 groupes >C=O, et $R^7$ représente un groupe alkyle en C1–C4.

3. Compositions selon la revendication 2, caractérisées en ce qu'elles contiennent en tant que composant c) un ou plusieurs composés de formule ci-dessus dans laquelle $R^3$ représente un groupe 2-hydroxynaphtyle ou 2,7-dihydroxynaphtyle, et X représente

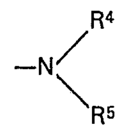

$R^5$ représentant $-CH_2-R^3$ et $R^4$ représentant

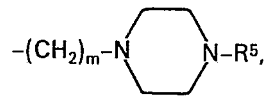

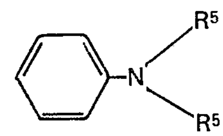

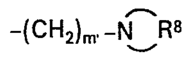 ou

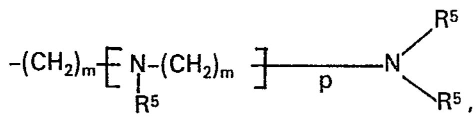

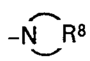 pour 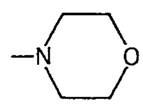 ou 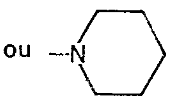 ,

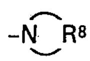

représente
m est égal à 2 ou 3, et
p est égal à 0, 1 ou 2.

4. Compositions selon les revendications 1 ou 2, caractérisées en ce qu'elles contiennent en tant que composant c) au moins un composé de formule

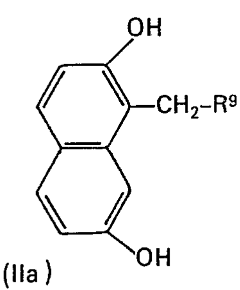

(IIa)

ou

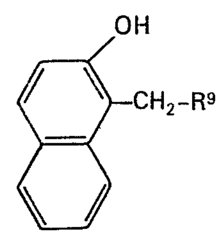

(IIb)

dans lesquelles $R^9$ représente un reste N-morpholinyle, N-pipéridinyle, N-pyrolidonyle, N-pyrazolyle, N-phtalimido, n-(N'-méthylpyrazinyle), N-(N'-éthylpyrazinyle), diméthylamino, diéthylamino, dipropylamino, dibutylamino, di-(2-méthoxyéthyl)-amino, di-(2-éthoxyéthyl)-amino, di-(2-propoxyéthyl)-amino, di-(2-butoxyéthyl)-amino, di-(3-méthoxypropyl)-amino, di-(3-éthoxypropyl)-amino, di-(3-butoxypropyl)-amino, di-(2-hydroxyéthyl)-amino ou dibenzylamino.

5. Compositions selon les revendications 1, 2, 3 ou 4, caractérisées en ce qu'elles contiennent en tant que composant e) en quantités de 0,1 à 3% en poids, par rapport à a) des produits qui amoindrissent ou empêchent la sédimentation.

6. Compositions selon la revendication 5, caractérisées en ce qu'elles contiennent en tant que

composant e) des esters di-(alkyliques en $C_4$-$C_{18}$) sulfosucciniques à l'état de sels de métaux alcalins ou d'ammonium.

7. Compositions selon la revendication 5, caractérisées en ce qu'elles contiennent en tant que composant e) un ester dioctylsulfosuccinique à l'état de sel de métal alcalin ou d'amine.

8. Compositions selon les revendications 1, 2, 3, 4, 5, 6 ou 7, caractérisées en ce qu'elles contiennent, par rapport à (a)+(b)+(c)+(d) - 25 à 50% en poids de a), 1,5 à 10% en poids de b), 3,0 à 7,0% en poids de c) et 70,5 à 38% en poids de d).

9. Utilisation des compositions selon les revendications 1 à 8, pour la coloration de peintures.

**Claims**

1. A fluid, stable formulation which contains

a) a finely divided pigment based on iron cyano complexes, iron-III oxide or iron-III oxide hydrate,

b) one or more $C_6$-$C_{18}$-alkylbenzenesulfonic acids,

c) one or more compounds which are obtained by Mannich condensation of 2-hydroxynaphthalene, which may or may not contain 1 or 2 additional β-hydroxyl groups, formaldehyde and primary or secondary aliphatic, cycloaliphatic or aromatic monoamines, diamines, triamines or polyamines or 5-membered or 6-membered heterocyclic compounds possessing an NH group as a ring member, and which contain from 1 to 6 hydroxynaphthyl groups, and

d) one or more organic liquids, the weight ratio of (b) to (c) being from 1:8 to 2:1 and the amount of (c) being from 10 to 20% by weight, based on (a).

2. A formulation as claimed in claim 1, which contains as (c) one or more compounds of the general formula

$R^3$-$CH_2$-X

where

$R^3$ is 2-hydroxynaphth-1-yl, which may or may not contain 1 or 2 additional β-hydroxyl groups, or is

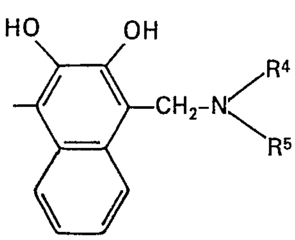

and

X is a radical of the formula

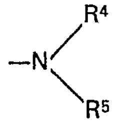

or

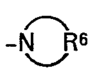

where

$R^4$ and $R^5$ are each an aliphatic or phenylaliphatic radical, and may be identical or different, or

$R^5$ is a group of the formula -$CH_2$-$R^3$ and

$R^4$ is a group of the formula

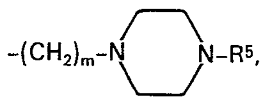

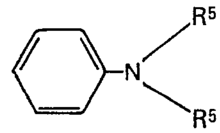

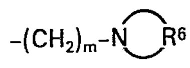

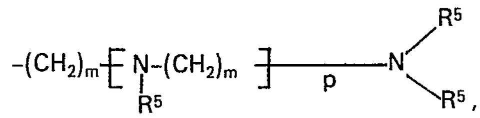

m is 2 or 3,

p is 0, 1 or 2,

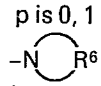

is a saturated or unsaturated 5-membered or 6-membered heterocyclic ring which may or may not contain >O or >N-$R^7$, a further ring members, and/or 1 or 2 >C=O groups and $R^7$ is $C_1$-$C_4$-alkyl.

3. A formulation as claimed in claim 2, which contains as (c) one or more compounds of the formula specified therein, where $R^3$ is 2-hydroxynaphthyl or 2,7-dihydroxynaphthyl, and X is

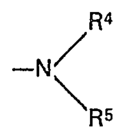

$R^5$ being -$CH_2$-$R^3$ and $R^4$ being

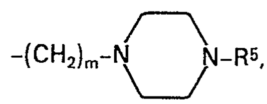

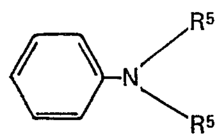

,

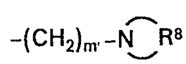

or

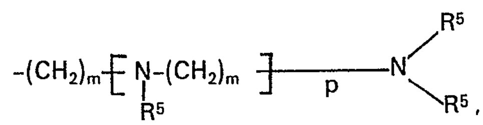

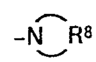

is

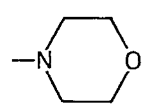

or

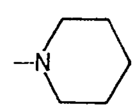

,

m is 2 or 3 and

p is 0, 1 or 2.

4. A formulation as claimed in claim 1 or 2, which contains as (c) one or more compounds of the formula

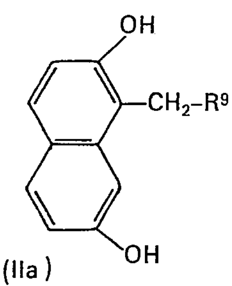

or

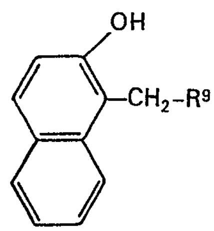

(IIa) (IIb)

where $R^9$ is N-morpholinyl, N-piperidinyl, N-pyrrolidonyl, N-pyrazolyl, N-phthalimido, N-(N'-methylpyrazinyl), N-(N'-ethylpyrazinyl), dimethylamino, diethylamino, dipropylamino, dibutylamino, di-(2-methoxyethyl)-amino, di-(2-ethoxyethyl)-amino, di-(2-propoxyethyl)-amino, di-(2-butoxyethyl)-amino, di-(3-methoxypropyl)-amino, di-(3-ethoxypropyl)-amino, di-(3-butoxypropyl)-amino, di-(2-hydroxyethylamino) or dibenzylamino.

5. A formulation as claimed in claim 1, 2, 3 or 4, which contains as (e) from 0.1 to 3% by weight, based on (a), of a sedimentation-reducing or sedimentation-preventing agent.

6. A formulation as claimed in claim 5, which contains as (e) an alkali metal salt or ammonium salt of a di-$C_4$–$C_{18}$-alkyl sulfosuccinate.

7. A formulation as claimed in claim 5, which contains as (e) en alkali metal salt or amine salt of dioctyl sulfosuccinate.

8. A formulation as claimed in claim 1, 2, 3, 4, 5, 6 or 7, which contains from 25 to 50% by weight of (a), from 1.5 to 10% by weight of (b), from 3.0 to 7.0% by weight of (c) and from 70.5 to 38% by weight of (d), the percentages being based on (a+b+c+d).

9. The use of a formulation as claimed in any of claims 1 to 8 for coloring paints.